(19) Europäisches Patentamt
European Patent Office
Office européen des brevets

(11) **EP 2 268 029 A1**

(12) **EUROPEAN PATENT APPLICATION**

(43) Date of publication:
**29.12.2010 Bulletin 2010/52**

(51) Int Cl.:
***H04N 7/24*** *(2006.01)*

(21) Application number: **10005526.8**

(22) Date of filing: **27.05.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **24.06.2009 JP 2009149490**

(71) Applicant: **Hitachi Consumer Electronics Co. Ltd.
Tokyo 100-0004 (JP)**

(72) Inventors:
• **Musha, Yoshinori
Tokyo 100-8220 (JP)**
• **Ikehara, Kiyoshi
Tokyo 100-8220 (JP)**

(74) Representative: **Strehl Schübel-Hopf & Partner
Maximilianstraße 54
D-80538 München (DE)**

(54) **Wireless video distribution system, content bit rate control method, and computer readable recording medium having content bit rate control program stored therein**

(57) A buffer monitoring section (126) of the display device (121, 301) monitors a usage status of a buffer (124) for storing video data, and transmits this usage status information to the tuner device (105, 201). A remaining buffer time estimation section (106) estimates a remaining time of video data within the buffer (124) based on the usage status information of the buffer (124). A wireless bandwidth estimation section (104) estimates the wireless bandwidth between the tuner device (105, 201) and the display device (121, 301). A content bit rate control section (109) controls a content bit rate of video data transmitted to the display device (121, 301) based on the estimated remaining time and wireless bandwidth of the video data. A content bit rate converting section (110) changes the content bit rate of video data, and transmits the video data from the tuner device (105, 201) to the display device (121, 301).

## FIG. 1

CONFIGURATION DIAGRAM OF FUNCTIONAL MODULES

**Description**

BACKGROUND OF THE INVENTION

1. Field of the Invention

The present invention relates to wireless video distribution systems, content bit rate control methods, and computer readable recording media having a content bit rate control program stored therein. In particular, the present invention relates to a wireless video distribution system wherein a tuner device is separated from a display device, a content bit rate control method in this system, and a computer readable recording medium having a content bit rate control program stored therein.

2. Related Art

It is known that in a television receiver, a tuner device is separated from a display device and video data is wirelessly transmitted from the tuner device to the display device. Moreover, for example, JP-A-2006-521035 discloses how to calculate the amount of time it would take for a video buffer to be empty.
The related art is also disclosed in JP-A-2006-060802, for example.

SUMMARY OF THE INVENTION

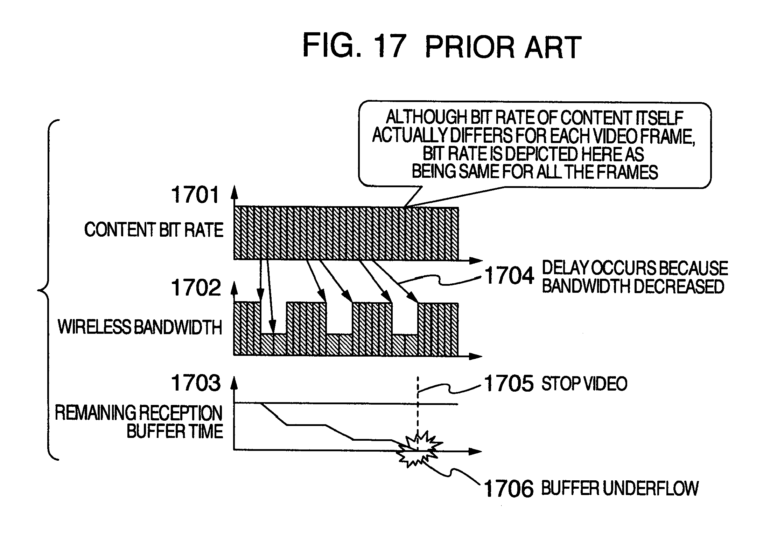

Fig. 17 shows a schematic view illustrating a problem.
A tuner device wirelessly transmits video data to a display device at a content bit rate 1701. Here, the content bit rate 1701 means the bit rate of a content itself in reproducing. Note that, although the bit rate of a content itself actually differs for each video frame, the same bit rate is depicted for all the frames, here, for sake of simplicity. The bandwidth fluctuation 1702 in Fig.17 shows a bandwidth fluctuation in a wireless LAN environment between the tuner device and the display device, indicating, for example, a fluctuation in the wireless LAN bandwidth due to a noise or an interference from other wireless LAN, the opening/closing of a door, the crossing of a person, the usage of a microwave oven, or the like. A remaining video buffer time 1703 indicates an amount in terms of time of the data stored in a video buffer of the display device. The amount is measured not in Byte but in Sec (second or time) or in the number of video frames, or the like. For example, 30 fps (frame per sec) would correspond to 0.5 second for 15 frames.
For example, a decrease in the bandwidth of a wireless section between the tuner device and the display device causes a delay (1704). For example, it may take a transmission time greater than a video reproduction time to transmit a content. It's a delay. On the other hand, since the amount of video output from a video buffer is fixed, the amount of data within the video buffer of the display device may decrease due to the above-described delay, and soon the video buffer may result in a buffer underflow state 1706, and the data in the video buffer may run out and not be reproduced any more (1705). In this specification, focusing on a video-specific reception buffer among reception buffers, this video-specific reception buffer may be referred to as a video buffer. Note that the abobe-described problem is true of other buffers used for audio, caption, and the like.

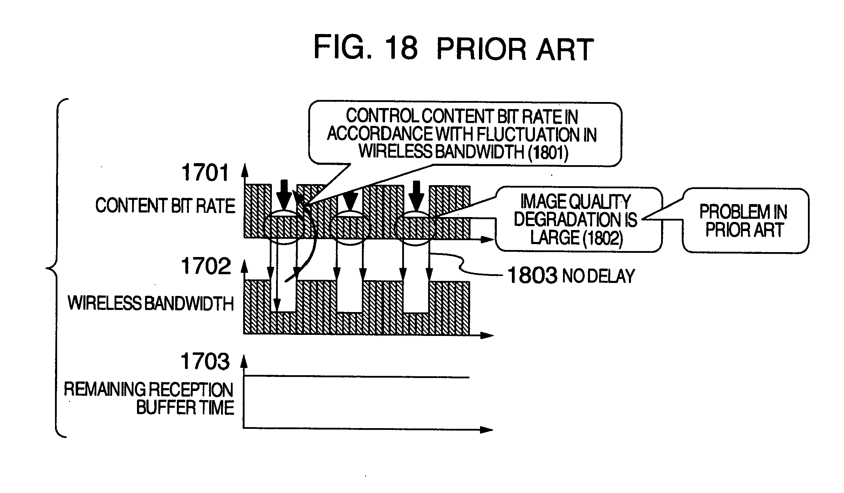

Fig. 18 shows a schematic view illustrating a prior art and its problem.
It is well known that in order to prevent the data of a video buffer from running out when a rapid decrease in the wireless bandwidth occurs a plurality of times, the bit rate of a content is adjusted in accordance with a fluctuation in the wireless bandwidth. For example, the content bit rate 1701 is controlled in accordance with the fluctuation in the wireless bandwidth 1702 (1801). With this technique, the above-described delay is dissolved (1803), however, since the data amount per unit time (bit rate) of a content is reduced in accordance with the bandwidth, the image quality degrades in accordance with a rapid fluctuation in the bandwidth (1802). Thus, a degradation of the image quality of a video being viewed may be perceived by a user.
Moreover, in the technique of JP-A-2006-521035, an exclusion of B and P frames or an exclusion of every other I frame may cause an unsmooth display due to a loss of frames.
The present invention has been made in view of the above-described problems. It is an object of the present invention to provide a wireless video distribution system, a content bit rate control method, and a computer readable recording medium having a content bit rate control program stored therein that prevent the stoppage of video and the degradation in image quality due to a fluctuation in the wireless bandwidth between a tuner device and a display device. Moreover, it is another object of the present invention to prevent the stoppage of video or the significant degradation in image quality even when a rapid decrease in the wireless bandwidth occurs a plurality of times in situations where there is no margin in the bandwidth of a wireless LAN, such as in distributing a video across a wall(s) between rooms, for example.
According to an aspect of the present invention, a video buffer amount of a client (display device) and a fluctuation in a wireless bandwidth are monitored, a data amount of the video buffer is predicted, and the bit rate of a content is controlled so as to prevent buffer underflow and a rapid and significant degradation in image quality from occurring.

According to another aspect of the present invention, for example, in a television receiver wherein a tuner device is separated from a display device, and wherein video data (Transport Stream(TS) data of MPEG2 or H.264) is sent between the devices of the television receiver via a wireless LAN, the television receiver comprises: a monitoring unit for monitoring a wireless bandwidth; a receiver unit for receiving a video buffer amount of the display device; a calculator unit that calculates a reduced amount of the bit rate of a content, with the use of the frequency of occurrence and magnitude of a rapid reduction in a wireless bandwidth and a remaining time that is converted from a remaining data amount of the video buffer; a controller unit for controlling the bit rate; and a converter unit for converting the bit rate. According to the above-described television receiver, the television receiver that sends OSD(On Screen Display) video data separately from a video may comprises a monitor unit for monitoring the data amount and frequency of an OSD image.

According to a first solution of the present invention, there is provided a wireless video distribution system comprising a wireless video distribution device that transmits video data via wireless communication with varying wireless bandwidth, and a wireless video receiving device that stores the video data received from the wireless video distribution device and reads and displays the video data, wherein the wireless video receiving device comprises: a buffer for storing video data; and a buffer monitoring section that monitors a usage status of the buffer and transmits feedback information including the usage status information to the wireless video distribution device, and wherein the wireless video distribution device comprises: a remaining buffer time estimation section that estimates a remaining time of video data within the buffer based on the usage status information of the buffer from the wireless video receiving device; a wireless bandwidth estimation section that estimates a wireless bandwidth between the wireless video distribution device and the wireless video receiving device; a content bit rate control section that controls a content bit rate of video data transmitted to the wireless video receiving device based on the estimated remaining time and wireless bandwidth of the video data; and a content bit rate converting section that converts a content bit rate of video data transmitted to the wireless video receiving device into a content bit rate controlled by the content bit rate control section.

According to a second solution of the present invention, there is provided a content bit rate control method in a wireless video distribution system comprising a wireless video distribution device that transmits video data via wireless communication with varying wireless bandwidth, and a wireless video receiving device that stores the video data received from the wireless video distribution device and reads and displays the video data, the method comprising the steps of: monitoring a usage status of a buffer of the wireless video receiving device for storing video data, and transmitting feedback information including the usage status information to the wireless video distribution device; estimating a remaining time of video data within the buffer based on the usage status information of the buffer from the wireless video receiving device; estimating a wireless bandwidth between the wireless video distribution device and the wireless video receiving device; controlling a content bit rate of video data transmitted to the wireless video receiving device based on the estimated remaining time and wireless bandwidth of the video data; and converting the content bit rate of video data to a content bit rate, which is controlled in the step of controlling the content bit rate, and transmitting the video data from the wireless video distribution device to the wireless video receiving device.

According to a third solution of the present invention, there is provided a readable recording medium having a content bit rate control program stored therein for causing a first computer to execute the steps of: transmitting video data via wireless communication with a variable wireless bandwidth from the first computer to a second computer that stores video data received and reads and displays the video data; based on the usage status information of a buffer of the second computer received from the second computer, estimating a remaining time of video data within this buffer; estimating a wireless bandwidth of the wireless communication; controlling a content bit rate of video data transmitted to the second computer based on the estimated remaining time and wireless bandwidth of the video data; converting the content bit rate of video data to a content bit rate, which is controlled in the step of controlling the content bit rate, and transmitting the video data to the second computer.

According to the present invention, it is possible to provide a wireless video distribution system, a content bit rate control method, and a computer readable recording medium having a content bit rate control program stored therein that prevent the stoppage of video and the degradation in image quality due to a fluctuation in the wireless bandwidth between a tuner device and a display device. Moreover, according to the present invention, it is possible to prevent the stoppage of video or the degradation in image quality even when a rapid decrease in the wireless bandwidth occurs a plurality of times in situations where there is no margin in the bandwidth of a wireless LAN, such as in distributing a video across a wall between rooms, for example.

The other objects and methods of achieving the objects will be readily understood in conjunction with the description of embodiments of the present invention and the drawings.

BRIEF DESCRIPTION OF THE DRAWINGS

Fig. 1 is a functional module configuration diagram (block diagram) showing a wireless video distribution device and a wireless video receiving device.

Fig. 2 is a configuration diagram of a server system.

Fig. 3 is a configuration diagram of a client system.

Fig. 4 is an explanatory view of an example of a content bit rate control method corresponding to the states of an estimated remaining video buffer time and wireless bandwidth.

Fig. 5 is a program analysis diagram showing a procedure to process feedback information in the server.

Fig. 6 is a program analysis diagram showing a feedback procedure in the client.

Fig. 7 is a program analysis diagram showing a procedure to estimate a wireless bandwidth by the server.

Fig. 8 is a program analysis diagram showing a procedure to monitor a wireless bandwidth by the client.

Fig. 9 is a program analysis diagram showing a procedure to estimate a remaining video buffer time by the server.

Fig. 10 is a program analysis diagram showing a procedure to monitor a video buffer by the client.

Fig. 11 is a program analysis diagram showing a procedure to control a content bit rate by the server.

Fig. 12 is an explanatory view of a data structure of feedback information.

Fig. 13 is an explanatory view of a bandwidth estimating work table.

Fig. 14 is an explanatory view of an estimated-bandwidth data table.

Fig. 15 is an explanatory view of a remaining-time data table.

Fig. 16 is an explanatory view of a content bit rate history table.

Fig. 17 is a schematic view illustrating a problem.

Fig. 18 is a schematic view illustrating a prior art and its problem.

Fig. 19 is a schematic view illustrating an effect of the present invention.

## DETAILED DESCRIPTION OF THE INVENTION

### 1. First embodiment

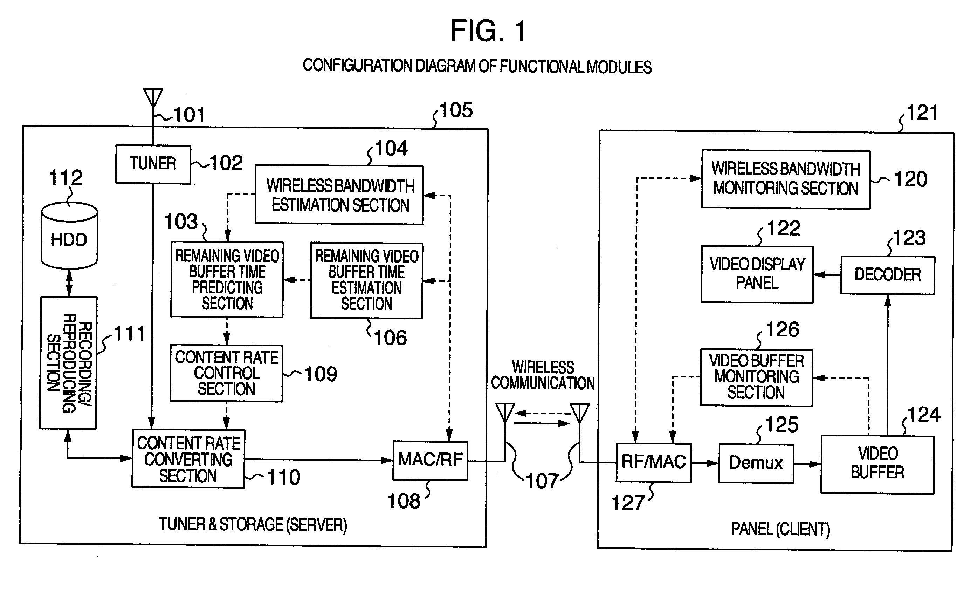

Fig. 1 shows a functional module configuration diagram (block diagram) of a wireless video distribution system, showing a wireless video distribution device and a wireless video receiving device.

The wireless video distribution system comprises a wireless video distribution device (a tuner & storage, a video distribution section, and a server) 105 and a wireless video receiving device (a panel, a video display section, and a client) 121. The wireless video distribution device 105 comprises a broadcast receiving antenna 101, a tuner 102, a remaining video buffer time predicting section 103, a wireless bandwidth estimation section 104, and a remaining video buffer time monitoring section (remaining buffer time estimation section) 106, a wireless LAN antenna 107, a wireless LAN module 108, a content bit rate control section 109, a content bit rate converting section 110, a recording/reproducing section 111, and an HDD (recorded data storage section) 112. The wireless video receiving device 121 comprises a wireless bandwidth monitoring section 120, a video display panel (display) 122, a decoder 123, a video buffer 124, a Demux section 125, a video buffer monitoring section 126, and a wireless LAN module 127.

The broadcast receiving antenna 101 is an antenna for digital terrestrial or BS(Broadcasting Satellite) digital broadcasting. In the BS digital broadcasting, the antenna is a parabolic antenna. The tuner 102 is a tuner for digital terrestrial or BS digital broadcasting. The remaining video buffer time predicting section 103 predicts a remaining time after a predetermined time of the video buffer 124 on the panel side, the remaining time being obtained by the remaining video buffer time monitoring section 106. For example, the remaining video buffer time predicting section 103 predicts the number of video frames at a time after data transmission. The wireless bandwidth estimation section 104, in cooperation with the wireless bandwidth monitoring section 120, monitors the wireless bandwidth between the wireless video distribution device 105 and the wireless video receiving device 121 with the use of the data amount that could be actually transmitted. The remaining video buffer time monitoring section 106 monitors the remaining time of the video buffer 124. For example, the remaining video buffer time monitoring section 106 receives information (the number of video frames or the like) for calculating the remaining time of the video buffer 124. The wireless LAN antenna 107 is an antenna for distributing video data to the wireless video receiving device 121 and receiving feedback information from the wireless video receiving device 121. As shown in the view, the communication between the wireless video distribution device 105 and the wireless video receiving device 121 may be ad-hoc communication (direct communication) or may be made via a wireless LAN router. The wireless LAN module 108 is a module for transmitting and receiving data via the wireless LAN antenna 107. The content rate control section 109 specifies a content bit rate and controls the content rate converting section 110. The content rate converting section 110 converts the bit rate of a content according to a specified rate by the content rate control section 109. The recording/reproducing section 111 stores data coming from the tuner 102 via the content rate converting section 110 onto the HDD 112 during recording. Moreover, during reproduction, the recording/ reproducing section 111 reads data of HDD 112 and transmits this data to the content rate converting section 110. HDD 112 stores recorded data.

The wireless bandwidth monitoring section 120 monitors a packet interval affecting the wireless bandwidth, and feeds back this to the wireless bandwidth estimation section 104. The video display panel 122 is a display for displaying the received video data. The decoder 123 decodes data for video, audio, caption, and the like, and outputs video data to the video display panel 122. The video buffer 124 is a buffer for storing data. Note that, for ease of description, only a buffer for video ES (Elemental Stream) data is shown. Actually, buffers for all kinds of ES may be included. The Demux section 125 is a section for separating TS (Transport stream) data, and separates ES data for video, audio, caption, and the like from the TS data. The video buffer monitoring section 126 monitors the video buffer 124, and sends information to the remaining video buffer time monitoring section 106. The wireless LAN module 127 is a module for transmitting and receiving data via the wireless LAN antenna 107.

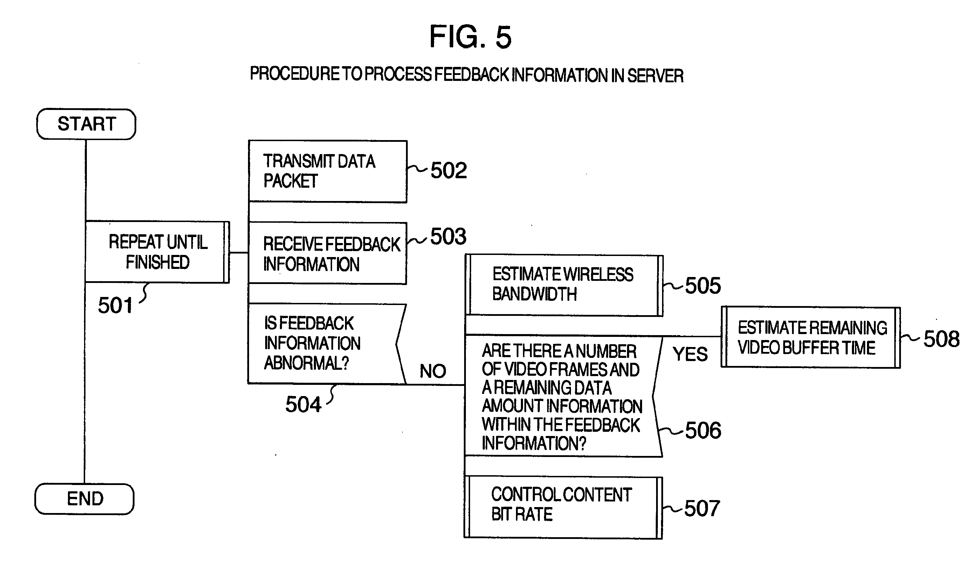

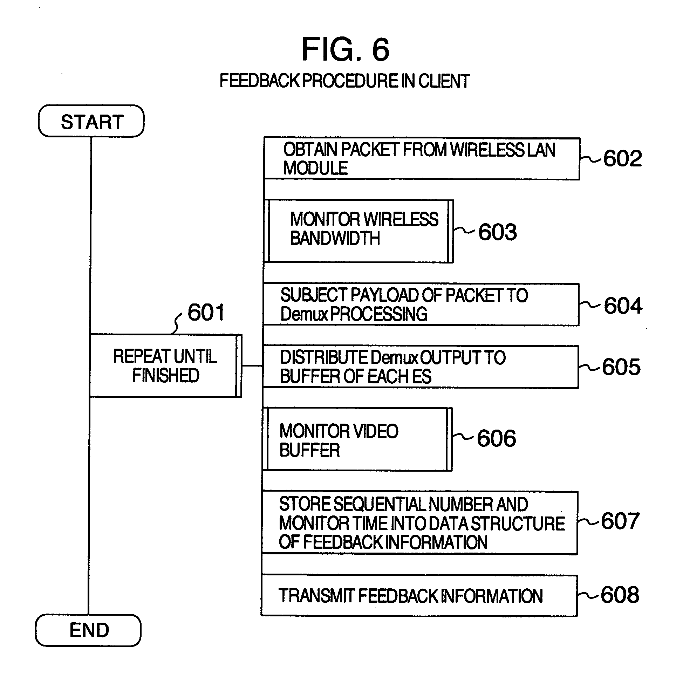

Fig. 5 is a program analysis diagram (PAD) showing a procedure to process feedback information in the server 105. Fig. 6 is a program analysis diagram showing a feedback procedure in the client 121.

The server 105 repeats Steps 502, 503 and 504 until video distribution is finished (Step 501). In Step 502, the server 105 transmits a data packet of video data to the client 121. In this embodiment, the data packet is described, as an example, in a method of using a data packet also for bandwidth estimation. For example, the data packet is transmitted with data (identification information) indicating "used for wireless bandwidth estimation" and its sequential number attached thereto. These pieces of information can be removed after being extracted by the client 121. Moreover, the transmission interval of continuous packets is specified in the "step of estimating the wireless bandwidth" (Step 508) described later. The initial value can be defined in advance. The server 105 transmits data at a specified packet interval in accordance with a bandwidth. For example, if the bandwidth is wide, the packet interval is reduced while if the bandwidth is narrow, the packet interval is increased. Thus, the transmission data amount per unit of time is adjusted. Note that, instead of using a data packet also for bandwidth estimation, an ordinary test packet for bandwidth estimation may be transmitted. In this case, a different packet from the ordinary data packet is generated and transmitted.

Now, the processing in the client 121 is described with reference to Fig. 6.

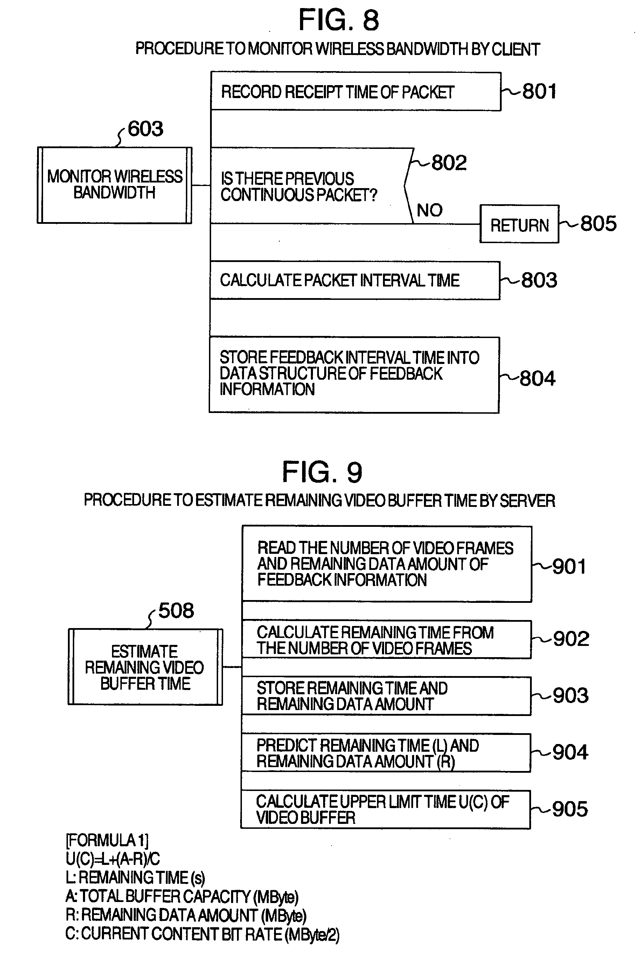

The client 121 repeats the following steps until video distribution is finished (Step 601). First, the client 121 receives a packet from the server 105 via the wireless LAN module 127 (Step 602). The client 121 (e.g., wireless bandwidth monitoring section 120) monitors the wireless bandwidth (Step 603). For example, the client 121 removes a header of the packet, and detects a delimiter of a video frame and measures the data amount for each frame in storing the packet into the video buffer 124, thereby monitoring the wireless bandwidth. The detailed processing of Step 603 will be described later in detail with reference to Fig. 8.

The client 121 (e.g., Demux section 125) subjects the payload of a packet to Demux processing (Step 604). The data stored in the payload of a packet is TS (Transport Stream) data. Demux processing separates this data into each ES data (Elemental Stream: for video, audio, caption, data broadcasting, and the like). The client 121 distributes the Demux output to a buffer of each ES (Step 605). For example, a result of the Demux processing is stored in a buffer prepared for each ES. Note that, each buffer serves as a ring buffer, and if there is a space, each buffer stores data, while if there is no space, each buffer generates an error indicative of buffer overflow and performs abnormality processing. For example, a processing to discard data and return to the normal operation or the like is performed. This embodiment provides a mechanism for preventing this error from occurring as much as possible.

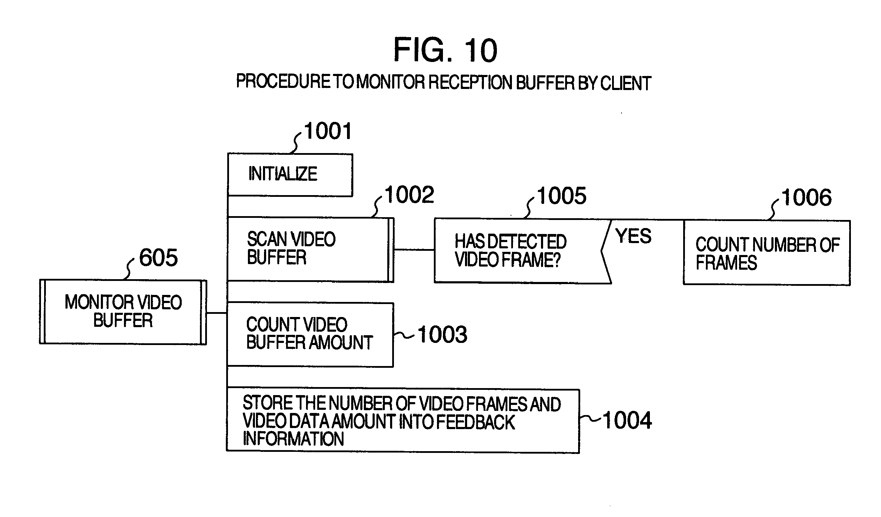

The client 121 monitors the video buffer 124 (Step 606). For example, the client 121 acquires the usage status information of a buffer, such as the number of video frames and remaining data amount within the video buffer 124. The detailed processing of Step 606 will be described later in detail with reference to Fig. 10. The client 121 stores a sequential number and a monitor time into a data structure of feedback information (Step 607).

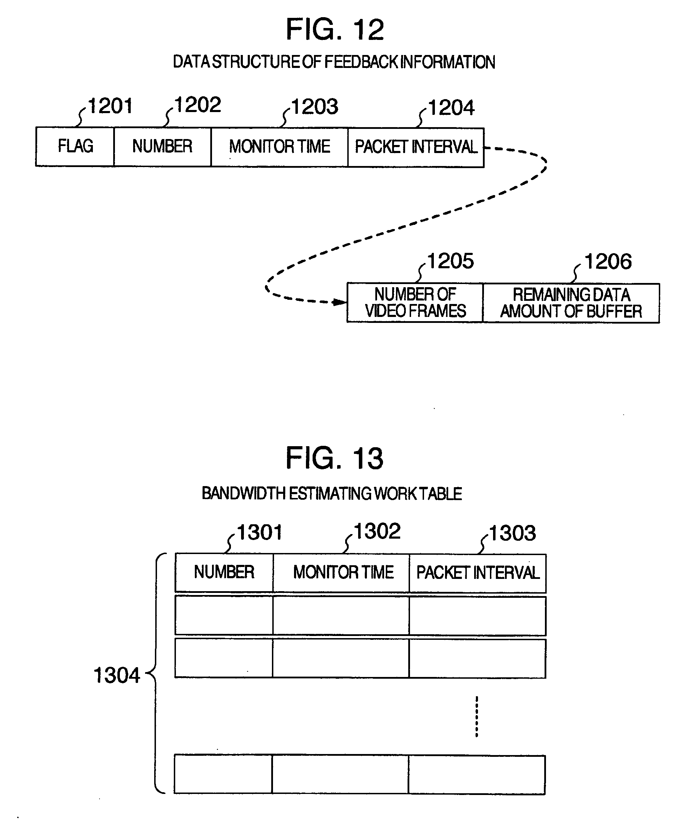

Fig. 12 shows an explanatory view of the data structure of the feedback information.

The feedback information is sent from the client 121 to the server 105. Fig. 12 shows only a payload portion of communication data. A flag 1201 is a flag indicating the presence or absence of the respective data fields of a number 1202, a monitor time 1203, a packet interval 1204, a number of video frames (a remaining buffer time) 1205, a remaining buffer data amount 1206. For example, the flag 1201 includes bit fields of the number of the data fields, five bits in this example. The bit field for existing data is set to 1 while the bit field for non-existing data is set to 0. A number 1202 is a sequential number that is issued in monitoring the bandwidth by the client 121. A monitor time 1203 is a monitor time that is issued in monitoring the bandwidth by the client 121. A packet interval 1204 is a measured packet interval time. A number of video frames 1205 is the number of video frames existing within the buffer. A remaining buffer data amount 1206 is the amount of data existing within the buffer, and is measured in Byte, Kbyte, or the like.

Returning to the description of Fig. 6, the client 121 transmits feedback information to the server 105 (Step 608). The feedback information can include, for example, the sequential number 1202, the monitor time 1203, the packet interval time 1204, the number of video frames 1205 within a buffer, and the remaining buffer data amount 1206, and the like. The data that could not be observed may not be included.

Returning to Fig. 5 and the description of the processing in the server 105, the server 105 receives feedback information from the client 121 in Step 503. Moreover, in Step 504, the server 105 determines whether or not the received feedback information is abnormal. For example, if the feedback information is corrupted as the data structure or if the sequential number and the monitor time information are not stored within the feedback information, the server 105 determines that the feedback information is abnormal. If the feedback information is not abnormal (Step 504, "No"), the server 105 performs a wireless bandwidth estimation processing (Step 505) and confirms whether or not there is the number of video frames and the remaining data amount information within the feedback information (Step 506), and controls the content bit rate (Step 507). Moreover, if information about the number of video frames and remaining data amount is stored within the feedback information (Step 506, "Yes"), the server 105 estimates the remaining video buffer time (Step 508).

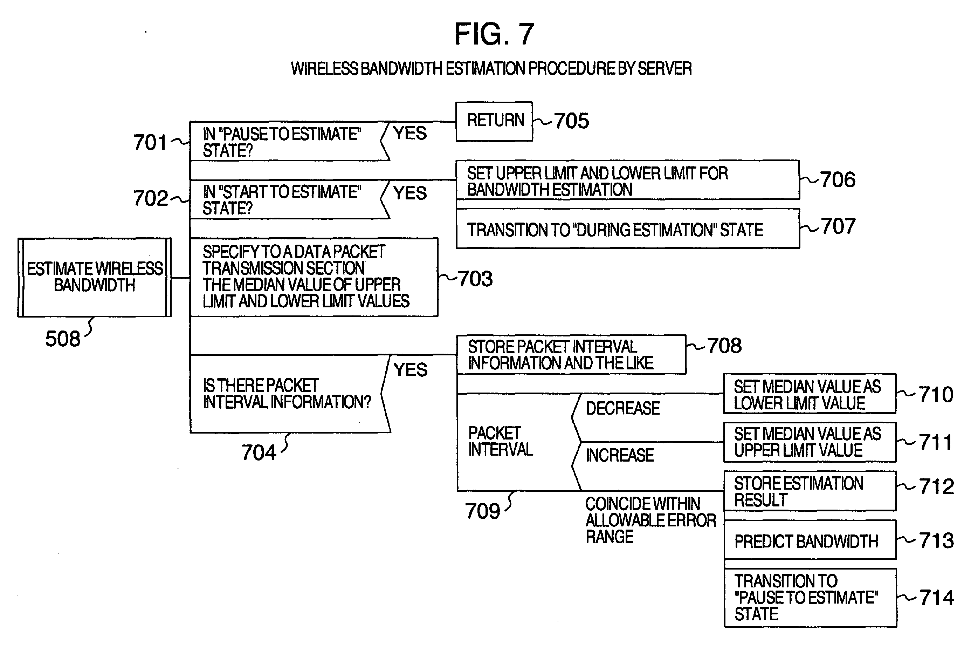

In the wireless bandwidth estimation processing (Step 505), the wireless bandwidth between the server 101 and the client 121 is estimated based on the packet interval information included in the feedback information, for example. In estimating the remaining video buffer time (Step 508), the remaining time of video data of the video buffer 124 is estimated, for example. A procedure of the wireless bandwidth estimation processing (Step 505) is shown in Fig. 7, and a procedure of the remaining video buffer time estimation processing (Step 508) is shown in Fig. 9. Each processing will be described in detail later.

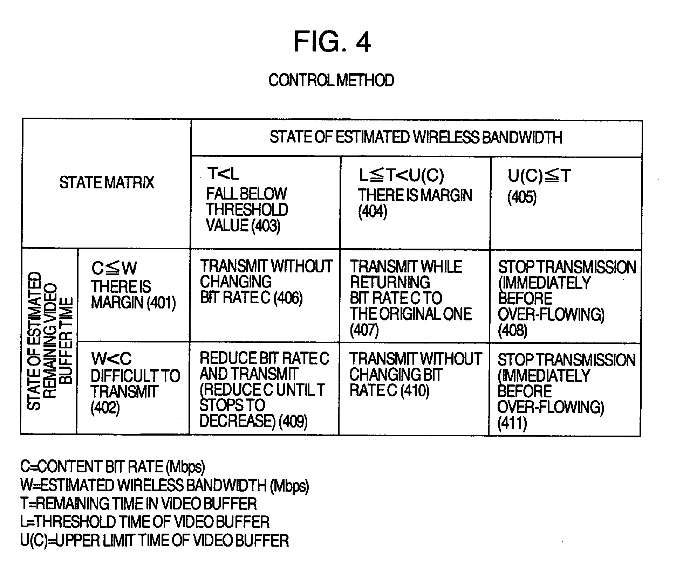

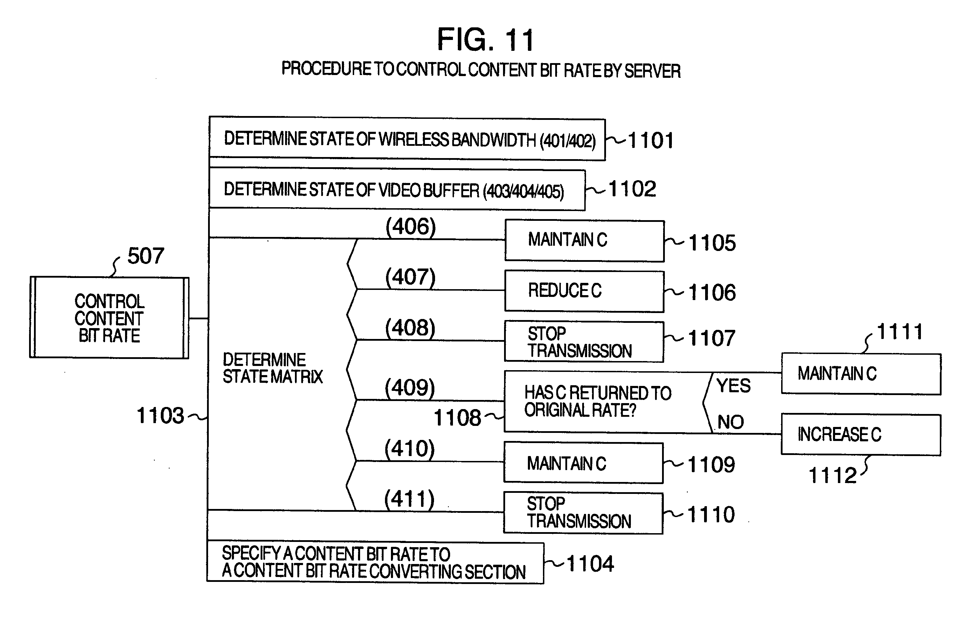

Fig. 4 shows an explanatory view of an example of a content bit rate control method corresponding to the states of the estimated remaining video buffer time and wireless bandwidth. Fig. 11 is a program analysis diagram showing a procedure to control the content bit rate by the server. With reference to FIG 4 and FIG 11, the content bit rate control of Step 507 is described in detail.

The content rate control section 109 specifies to the content bit rate converting section 110 a bit rate according to a state matrix of Fig. 4. A wireless bandwidth W is obtained in the step of estimating the wireless bandwidth (Step 505) described above, more specifically in a step of predicting the bandwidth (Step 713) of Fig. 7. A remaining time T within the video buffer and an upper limit time U(C) of the video buffer are obtained in Step 508 described above (more specifically in a processing in Fig. 9 to be described later). A threshold value time L of the video buffer may be set in advance.

The state matrix of Fig. 4 shows the states of the estimated wireless bandwidth W in the vertical direction and the states of the estimated remaining video buffer time T in the horizontal direction. The state of the wireless bandwidth divides into a state where the content bit rate C is equal to or less than the wireless bandwidth W (401) and a state where the content bit rate C is greater than the wireless bandwidth W (402). For example, if the content bit rate C is equal to or less than the wireless bandwidth W (401), there is margin in the wireless bandwidth while if the content bit rate C is greater than the wireless bandwidth W (402), the data of this content bit rate C cannot be transmitted without a delay.

The state of the estimated remaining video buffer time T divides into a state where the estimated remaining video buffer time T is less than the threshold value time L of the video buffer (403), a state where the estimated remaining video buffer time T is greater than the threshold value time L of the video buffer and less than the upper limit time U(C) of the video buffer (404), and a state where the estimated remaining video buffer time T is equal to or greater than the upper limit time U(C) of the video buffer (405). Reference numerals 406-411 represent the states defined by a combination of the state of the wireless bandwidth and the state of the estimated remaining video buffer time.

First, the content rate control section 109 determines the state of the wireless bandwidth (Step 1101). For example, the content rate control section 109 determines whether the state of the wireless bandwidth is the state 401 or state 402 of Fig. 4. Note that the initial value of the content bit rate C shall be set to the bit rate of a content before modification. Moreover, the content rate control section 109 determines the state of the video buffer (Step 1102). For example, the content rate control section 109 determines whether the state of the video buffer is either the state 403, 404, or 405 of Fig. 4. Note that the order of Steps 1101 and 1102 may be reversed.

The content rate control section 109 determines the states of 406-411 of Fig. 4 from the determination results of Steps 1101 and 1102 (Step 1103). In each state, the content bit rate is controlled as follows.

State 406: transmit while maintaining the bit rate C as is (Step 1105).
State 407: transmit while returning the bit rate C to the original one (Step 1108). For example, it is determined whether or not the bit rate C has returned to the original rate (e.g., initial value) (Step 1108), and if not, the content bit rate C is gradually increased until it returns to the original rate (Step 1111), while if it has returned, the content bit rate C is maintained as is (Step 1112).
State 408: stop transmission (Step 1107). For example, a buffer overflow error is issued so as to stop transmission.
State 409: reduce the bit rate C and transmit (C is gradually reduced until T stops to decrease) (Step 1106).
State 410: transmit at the original bit rate C as is (Step 1109).
State 411: stop transmission (Step 1110). For example, a buffer overflow error is issued so as to stop transmission.

The content rate control section 109 specifies to the content bit rate converting section 110 a content bit rate corresponding to the state (Step 1104).

To explain an example of state transition, the normal state is the state 407, for example. In this case, the content bit rate remains the original one. Here, if the condition of the wireless bandwidth between the server 105 and the client 121 degrades, the state transitions to the state 410. In the state 410, data is transmitted at the original bit rate as is without changing the content bit rate C. Since the wireless bandwidth is narrow in the state 410, a delay in the data transmission occurs and the remaining video buffer time runs out. If the remaining video buffer time T falls below the threshold value time L, then the state transitions to the state 409, where video data is transmitted while gradually reducing the bit rate C until the remaining video buffer time T stops to decrease.

Upon recovery of the wireless bandwidth, the state transitions to the state 406. In the state 406, data is transmitted while maintaining the reduced bit rate C as is. Here, since data is transmitted at the reduced content bit rate, the number of frames per unit time written to the video buffer 124 increases as compared with the number of frames per unit time that is output and displayed from the video buffer 124. Accordingly, the remaining video buffer time will increase. If the remaining video buffer time becomes equal to or greater than the threshold value time L, then the state transitions to the state 407, where video data is transmitted while gradually returning the bit rate C to the original one.

(Wireless bandwidth estimation)

Fig. 13 shows an explanatory view of a bandwidth estimating work table.

The bandwidth estimating work table is stored in the wireless bandwidth estimation section 104, for example. The wireless bandwidth estimation section 104 extracts each information from feedback information, and stores this information in this table.

A sequential number 1301, a monitor time 1302, and a packet interval 1303 are associated with each other and stored in the bandwidth estimating work table. The number 1301 is a sequential number which the wireless bandwidth monitoring section 120 of the client 121 issued, and is extracted from the feedback information. With the use of the number 1301, a disturbance in the order of packets or a lack of packets can be detected. The monitor time 1302 is a monitor time which the wireless bandwidth monitoring section 120 of the client 121 issued, and is extracted from the feedback information. With the use of the monitor time 1302, a transmission delay of feedback information can be measured. The packet interval 1303 is a packet interval time which the wireless bandwidth monitoring section 120 of the client 121 observed, and is extracted from the feedback information. With the use of the packet interval 1303, a change in the interval can be detected. The bandwidth estimating work table stores therein received feedback information (1304). Note that, once the bandwidth can be estimated, data is discarded from the older ones.

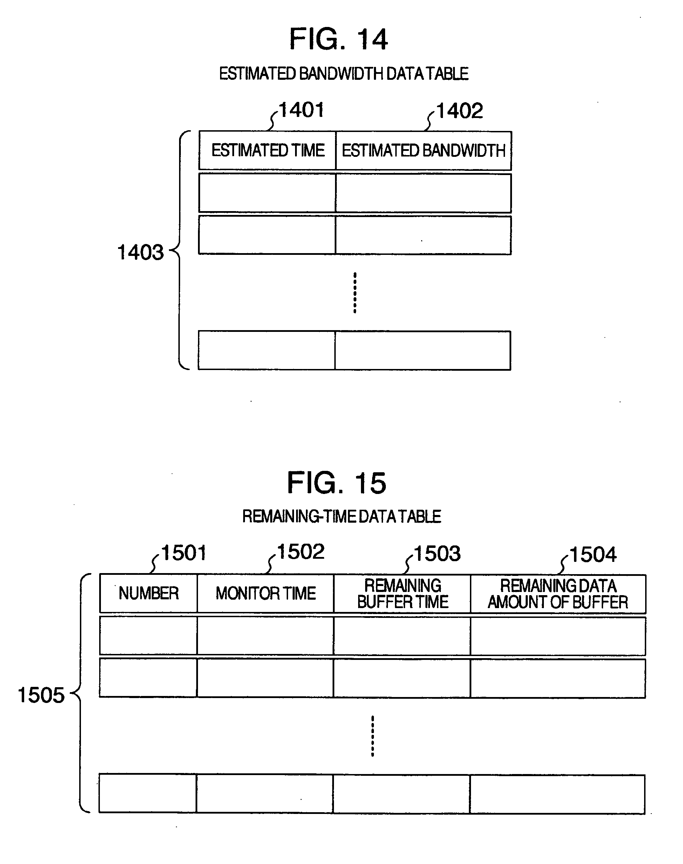

Fig. 14 shows an explanatory view of an estimated-bandwidth data table.

The estimated-bandwidth data table is stored in the wireless bandwidth estimation section 104, for example. The wireless bandwidth estimation section 104 stores in this table a bandwidth that is estimated using the bandwidth estimating work table, and stores this table on the server side. In the estimated-bandwidth data table, an estimated time 1401 and an estimated bandwidth 1402 are associated with each other and stored.

The estimated time 1401 indicates a time when the bandwidth estimation is finished. In the estimated bandwidth 1402, a bandwidth that is estimated using, for example, "Pathload" method described below or the like is stored. From a change in the bandwidth or from the frequency/attenuation interval of bandwidth attenuation, the bandwidth at a data transmission timing is estimated. In the estimated-bandwidth data table, the estimated bandwidth is stored (1403). Note that data is suitably discarded from the older ones that are not used in calculation of a change in the bandwidth or in calculation of bandwidth attenuation/attenuation interval.

Fig. 7 is a program analysis diagram showing a procedure to estimate the wireless bandwidth by the server. Fig. 7 is a detailed flow of the step of estimating the wireless bandwidth (Step 508) of Fig. 5.

First, the flow of Fig. 7 is described. This procedure carries on the processings by causing the internal state to transition little by little every time this procedure is called. The state transition occurs from "pause to estimate (in the initial state)" to "start to estimate" to "during estimation" to "pause to estimate", and this transition sequence is repeated at certain intervals or as required. In the bandwidth estimation, the following known approaches (Pathload, PathChirp, IGI, and the like) can be employed.

- "Pathload" Manish Jain, Constantinos Dovrolis, 2002
- "PathChirp" Vinay Ribeiro, Rudolf Riedi, Richard Baraniuk, Jiri Navratil, Les Cottrell, 2003
- "IGI (Initial Gap Increasing)" Ningning Hu, Peter Steenkiste, 2003

Note that, not limited thereto, suitable bandwidth estimation approaches may be employed.

Among these approaches, the present approach is described with Pathload taken as an example. In the following approach, an ordinary test packet is transmitted to estimate a bandwidth. However, by estimating a bandwidth using the actually transmitted data, data transmission can be performed while performing the estimation processing.

First, the wireless bandwidth estimation section 104 determines the states of wireless bandwidth estimation (Steps 701, 702). If it is in the "pause to estimate" state (Step 701, "Yes"), the processing of this flow is finished (Step 705). Moreover, if it is in the "start to estimate" state (Step 702, "Yes"), Steps 706 and 707 are executed. Note that state transition from the "pause to estimate" state to the "start to estimate" state is made outside this procedure. For example, the state is checked every one second using a timer, or immediately after the start of video distribution. If it is in the "pause to estimate" state, a processing to change the "pause to estimate" state to the "start to estimate" state is performed.

In Step 706, the wireless bandwidth estimation section 104 sets an upper limit and lower limit for the bandwidth estimation. Note that, at the time of starting estimation, the upper limit is set to a physical upper limit of the wireless module 108 and the lower limit is set to 0. Moreover, in Step 707, the wireless bandwidth estimation section 104 transitions to the "during estimation" state. The state can be stored in a suitable storage section.

The wireless bandwidth estimation section 104 specifies to a data packet transmission section (wireless LAN module 108) the median value of the set upper limit and lower limit. For example, the wireless bandwidth estimation section 104 calculates the median value of the upper limit and lower limit for bandwidth estimation, and specifies this median value as the bandwidth of an estimation candidate to be used in the step of "transmitting a data packet" (Step 502) of Fig. 5. The wireless LAN module 108 transmits data in Step 502 at a packet interval so that a transfer rate of the data is the same as the specified value of the estimation candidate of the bandwidth.. That is, if the specified value is high, the packet interval decreases while if the specified valueis low, the packet interval increases. Thus, the transmission data amount per unit of time is adjusted.

The wireless bandwidth estimation section 104 determines whether or not there is packet interval information in the feedback information from the client 121 (Step 704). If there is data in the field of the packet interval information 1204 of the feedback information (Step 704, "Yes"), the following processings are executed.

The wireless bandwidth estimation section 104 stores the packet interval information (1204), monitor time information (1203), and sequential number (1202) of the received feedback information into the bandwidth estimating work table shown in Fig. 13 (Step 708). The wireless bandwidth estimation section 104 determines the packet interval (Step 709). For example, the wireless bandwidth estimation section 104 determines whether the packet interval has decreased or increased as compared with that of the previous data (data with the immediately preceding sequential number) or coincides with that of the immediately previous data within a specified allowable error range (whether the difference between the both packet intervals is within the allowable error range). If the packet interval has decreased, the wireless bandwidth estimation section 104 sets the median value employed in Step 703 as a new lower limit in order to reduce the range of estimation candidate of the bandwidth in the upper side of the transfer rate because it indicates that there is margin in the wireless bandwidth (Step 710). On the other hand, if the packet interval has increased, the wireless bandwidth estimation section 104 sets the median value employed in Step 703 as a new upper limit in order to reduce the range of estimation candidate of the bandwidth in the lower side of the transfer rate because it indicates a shortage of the wireless bandwidth (Step 711).

If the both packet intervals are coincident with each other within the allowable error range (Step 709), the wireless bandwidth estimation section 104 regards the transmission data amount per unit of time as the estimated bandwidth, and stores the estimated bandwidth 1402 and the current time (estimated time) 1401 into the estimated-bandwidth data table (Fig. 14) (Step 712). In this case, the old data of the bandwidth estimating work table (Fig. 13) may be suitably discarded. With the use of the data stored in the estimated-bandwidth data table (Fig. 14), the wireless bandwidth estimation section 104 extrapolates the time in the future direction, and predicts the wireless bandwidth at a time point when the packet is to be transmitted to the client 121 (Step 713). Note that, as the approach of prediction, a suitable one may be employed. Thus, the estimated wireless bandwidth W in the "control method" of Fig. 4 can be obtained. Note that, by omitting the processing of Step 713, the bandwidth estimated in Step 712 may be used as the wireless bandwidth W. Because of the completion of estimation, the wireless bandwidth estimation section 104 transitions to the "pause to estimate" state (Step 714).

Fig. 8 is a program analysis diagram showing a procedure to monitor the wireless bandwidth by the client 121. The wireless bandwidth estimation procedure of the server 105 links up with the wireless bandwidth estimation procedure of the client 121. Fig. 8 shows a detailed flow of the step of monitoring the wireless bandwidth (Step 603) of Fig. 6. Upon receipt of a packet sent for use in monitoring the wireless bandwidth, the wireless bandwidth monitoring section 120 records a sequential number and receipt time of the packet (Steps 801). The wireless bandwidth monitoring section 120 determines whether or not there is a previous continuous packet (Step 802). The determination of the continuous packet can be made, for example, by determining that the sequential number within the received packet is continuous with the stored sequential number. If an exchange of the packet order occurred, the packets are handled with the normal order while if the packet has not arrived in a certain time, this case is handled as the lack of a wireless bandwidth monitoring packet. If there is no previous continuous packet, this processing is finished (Step 805). The wireless bandwidth monitoring section 120 calculates the packet interval time T (Step 803). For example, in two continuous packets, a difference between the previous packet receipt time and the current packet receipt time is calculated and set as the packet interval time. The wireless bandwidth monitoring section 120 stores the packet interval time into the data structure of feedback information (Step 804). For example, the data is stored in the packet interval field 1204 of the data structure of Fig. 12, and the corresponding bit of the flag 1201 is set. The feedback information is transmitted from the client 121 to the server 105 (e.g., Step 608 described above).

(Estimation of remaining video buffer time)

Fig. 15 shows an explanatory view of the remaining-time data table.
The remaining-time data table is stored on the server 105 side. For example, the remaining-time data table can be stored in the remaining video buffer time monitoring section 106 or the remaining video buffer time predicting section 103. Each information is extracted from the feedback information from the client 121, and is stored in this table. Since the pieces of information described below are not necessarily included in the feedback information, these pieces of information are stored only if they exist.
A number 1501 is a sequential number which the wireless bandwidth monitoring section 120 of the client 121 issued. With the use of this number 1501, a disturbance in the order of packets or a lack of packets can be detected. A monitor time 1502 is a monitor time which the wireless bandwidth monitoring section 120 of the client 121 issued. The monitor time 1502 is extracted from the feedback information. A remaining buffer time 1503 is calculated from the "number of video frames within the buffer extracted from the feedback information" multiplied by the "time per frame" (e.g., 1/30). A remaining buffer data amount 1504 is the amount of data existing within the video buffer 124, and is extracted from the feedback information. Note that, data is discarded from the older ones in a storage 1505 of the remaining time data, i.e., the storage constitutes a ring buffer.
Fig. 10 is a program analysis diagram showing a procedure to monitor the video buffer by the client 121.
Fig. 10 is a detailed flow of the step of monitoring the video buffer (Step 606) of Fig. 6. For example, Fig. 10 is a program analysis diagram for the video buffer monitoring section 126 to calculate the number of video frames and remaining buffer data amount within the video buffer 124 and store these information into the feedback information.
First, the video buffer monitoring section 126 is initialized (Step 1001). For example, the number of video frames is set to 0. The video buffer monitoring section 126 scans the video buffer 124 and searches video data within the video buffer 124 (Step 1002). For example, the buffer 124 for the video ES is scanned. These steps are repeated until all the buffers are processed. During scanning, the video buffer monitoring section 126 detects video frames (I, P, and B frames) (Step 1005). Once the video frames (I, P, and B frames) are detected, a detailed monitoring for each frame can be performed. Or, once a sequence header (only for the I frame) is detected, a relatively rough monitoring per GOP (Group of Pictures, the video unit of 15 frames, 0.5 seconds of pictures) can be performed. What to detect can be defined in advance. The video buffer monitoring section 126 counts up every time the video frame is detected, thereby counting the number of video frames (Step 1006).
Note that, as another method of counting the number of video frames, also other than scanning as described above, the video frame may be detected in distributing from the Demux output to each ES in Step 605, thereby reducing the number of times of memory access and speeding up of processings.
Moreover, the video buffer monitoring section 126 counts the amount of video data (Step 1003). As with this embodiment, in the case of the ring buffer exclusively for the video ES, the data amount can be calculated from the position of a head pointer of data and the position of a tail end pointer of the data. The video buffer monitoring section 126 stores the number of video frames 1205 and the amount of video data (remaining buffer data amount) 1206 into the feedback information (Step 1004). The feedback information is transmitted from the client 121 to the server 105 (e.g., Step 608 described above).
Fig. 9 is a program analysis diagram showing a procedure to estimate the remaining video buffer time by the server 105. Fig. 9 is a detailed flow of the step of estimating the remaining video buffer time (Step 508) of Fig. 5.
The remaining video buffer time monitoring section 106 reads the number of video frames and remaining data amount of the feedback information (Step 901). For example, the remaining video buffer time monitoring section 106 may extract the number of video frames and remaining data amount from the packet upon receipt of the feedback information or may keep the feedback information stored and read the number of video frames and remaining data amount at a suitable timing later. The remaining video buffer time monitoring section 106 calculates the remaining time of video reproduction from the number of video frames (Step 902). For example, the remaining video buffer time monitoring section 106 calculates the remaining time of video reproduction according to a formula "remaining time (second) = number of video frames/number of frames per second." The remaining video buffer time monitoring section 106 stores the remaining time and the remaining data amount into the remaining-time data table (Step 903). For example, the remaining buffer time 1503 and the remaining buffer data amount 1504 are stored in the remaining-time data table (Fig. 15) together with the sequential number 1501 and the monitor time 1502 extracted from the feedback information. Note that, the remaining-time data table constitutes a ring buffer, where the old data is discarded (overwritten).
The remaining video buffer time predicting section 103 predicts the remaining time (T) and the remaining data amount (Step 904). For example, because it takes a certain time from the creation of the feedback information in the client 121 to the reception of the one in the server 105 and it moreover takes a certain time from the prediction of the remaining time and the remaining data amount in the server 105 to the reception of video data in the video buffer of the client 121, the remaining time and remaining data amount at a time point in future need to be predicted. For the purpose of this prediction, with the use of the data stored in the remaining-time data table of Fig. 15, the prediction is made extrapolating the time from the monitor time 1502 toward a future time. Moreover, if there is a deviation between the actual data of feedback information and the previously predicted data, it is also possible to improve the prediction performance by taking into account this deviation in the current prediction. Note that, in order to calculate a predicted value at a time point in future from a plurality of data, a suitable approach may be employed.

The remaining video buffer time predicting section 103 calculates the upper limit time U(C) of the video buffer (Step 905). The upper limit time U(C) is determined in accordance with Formula 1 below by considering the tradeoff between the data already stored in the video buffer and the data that is about to be transmitted and stored at the content bit rate C.

$$U(C) = \quad R/(R/L - C) \qquad \text{in the case of } (R/L > C)$$

$$U(C) = \quad (A-R)/(C - R/L) \quad \text{in the case of } (R/L < C) \qquad \qquad \text{(Formula 1)}$$

$$U(C) = \quad \text{Infinity} \qquad \text{in the case of } (R/L = C)$$

Where L: remaining time (S), A: buffer total capacity (MByte), R: remaining data amount (MByte), C: current content bit rate (MByte/S). The remaining video buffer time predicting section 103 and the remaining video buffer time monitoring section 106 store each calculated data into a suitable storage section.

Note that, in the case where a plurality of screens, such as two screens, are displayed simultaneously on the panel 122, the buffer 124 may include a memory area for each video data to be displayed and calculate the remaining time for each video data, for example. Moreover, among the respective remaining times calculated for each video data, the minimum one may be used or the maximum one may be used. When the minimum one is used, the stoppage or image quality degradation in displaying both two screens can be prevented, while when the maximum one is used, at least one video can be reproduced and the image quality degradation of the video can be prevented although both two screens cannot be continuously displayed.

(Storing a content bit rate)

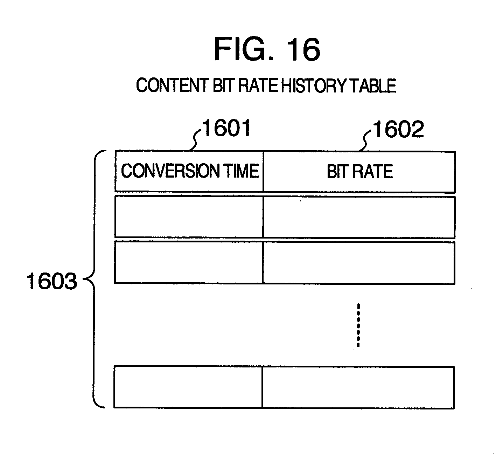

Fig. 16 shows an explanatory view of a content bit rate history table.
The content bit rate history table is stored in the content rate control section 109 or the content rate converting section 110, for example. In the content bit rate history table, a conversion time 1601 and a bit rate 1602 are stored. The conversion time 1601 is a time at which a content bit rate is changed. The bit rate 1602 refers to the value of a content bit rate determined by the content rate control section 109, or a value (e.g., Mbps or the like) converted from a content bit rate by the content rate converting section 110. Data is discarded from the older ones in the storage 1603 of the content bit rate data, in other words the storage 1603 constitutes a ring buffer.

(Example of effects)

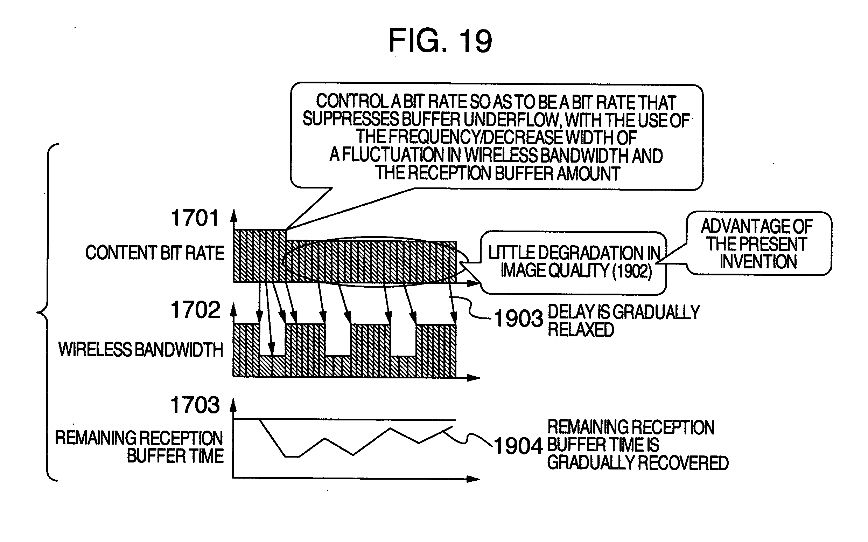

Fig. 19 shows a schematic view illustrating an effect of this embodiment.
As described above, the server 105 controls, according to the state of a wireless bandwidth and the amount of the video buffer, the content bit rate 1701 so as to be a bit rate that suppresses buffer underflow (1901). Accordingly, there is little degradation in the image quality (1902). Instead of changing the bit rate so as to directly match a fluctuation in the wireless bandwidth 1702, the bit rate is reduced slightly as long as there is margin in the remaining time of the video buffer, thereby suppressing the image quality degradation. A delay having occurred before reducing the bit rate is gradually relaxed (restored) after controlling the bit rate (1903). Accordingly, the remaining video buffer time 1703 also gradually recovers (1904).

2. Second embodiment

The server 105 and client 121 in the first embodiment may comprise also a set top box (STB), a PC, or the like. The respective processings in the server 105 and client 121 are the same as those of the first embodiment. These processings are performed by the processors (processing units) 208 and 307, respectively. Moreover, a program executed by each of the processors and each table described above are stored in a storage section, such as the internal storage sections 211, 310, for example. This program can be installed/updated from a recording medium, a network, or the like.

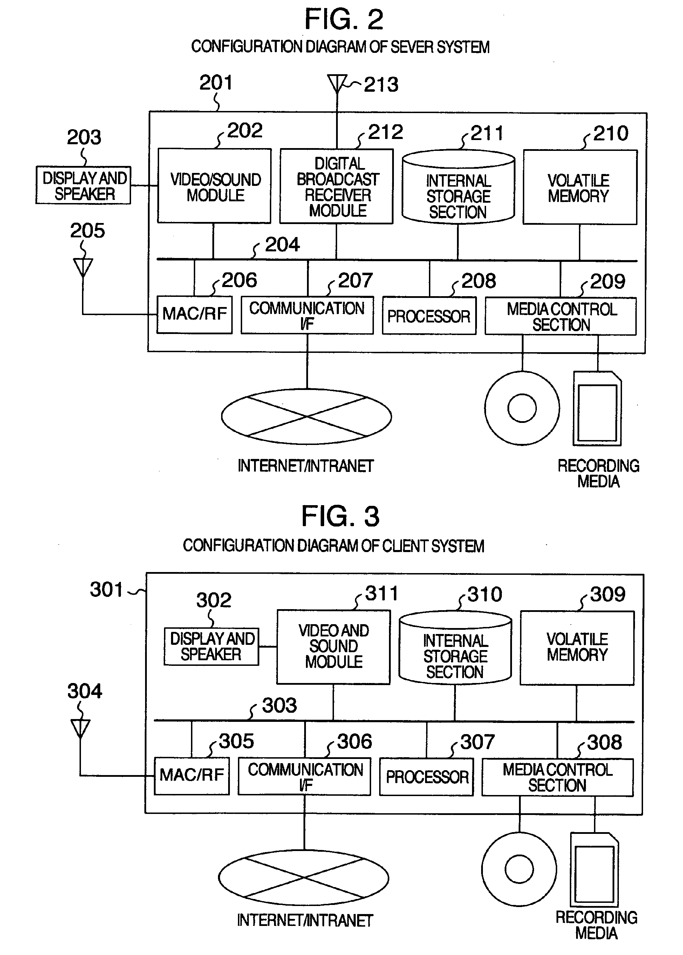

Fig. 2 shows a configuration diagram of a server system.
A server 201 may use a firmware-updatable STB or PC, for example. Moreover, the functions of the first embodiment can be realized by installing software or programs for performing the processings of the first embodiment into such a server 201 and by the processors executing this software or programs. The examples of a method for installing/updating software include the following three ones.

(1) usage of a recording medium
(2) download via the Internet/intranet
(3) broadcast download (download via an ordinary TV, as well)

The server 201 is a PC with a digital-broadcasting receiver tuner or a firmware-updatable digital broadcasting receiver device, for example.

The server 201 comprises a processor 208, a storage section 211, a digital-broadcasting receiver module 212, a wireless LAN antenna 205, MAC/RF 206, and an internal bus 204, for example. Moreover, the server 201 may further comprise a video sound module 202, a display and speaker 203, a communication interface 207, a media control section 209, and a volatile memory 210.

The video sound module 202 has a video and audio output function (HDMI or the like), for example. The display and speaker 203 outputs the received video data and audio data. The internal bus 204 is a PCI-Express or the like in the case of a PC, for example. The wireless LAN antenna 205 is an antenna for transmitting and receiving data via a wireless LAN. Note that, the wireless LAN antenna 205 may have three or more antennas in the case of the IEEE802.11n scheme, for example. MAC/RF 206 is a wireless LAN module. MAC/RF 206 may send the obtained firmware to the client via a wireless LAN. The communication interface 207 is an Ethernet card (Ethernet is the registered trademark) or the like, for example, wherein firmware can be obtained from a Web site and installed/updated. The processor 208 is a CPU in the case of a PC, or a microcomputer in the case of a STB, for example. The media control sections 209 is a USB, SATA, or the like as the interface, and is a CD, DVD, BD, an SD card, or the like as the drive, for example. The media control section 209 may store firmware used for installation/update onto a medium and read the program therefrom, thereby also introducing/updating the program.

The volatile memory 210 is a RAM, for example. The internal storage section 211 is an HDD in the case of a PC, or a nonvolatile memory, such as a Flash ROM in the case of a STB, for example. Although the digital-broadcasting receiver module 212 has been described as a structure incorporated in the server 201 in the illustrated example, the digital-broadcasting receiver module 212 may be external to the server 201 via a USB. The digital-broadcasting receiver module 212 can obtain and install/update firmware via broadcast download. The digital-broadcasting receiving antenna 213 is coupled to the digital-broadcasting receiver module 212 through a coaxial cable, for example.

Fig. 3 shows a configuration diagram of a client system.

In a client 301, a firmware-updatable STB or PC can be used, for example. Moreover, the examples of a method for installing/updating software include the following three ones as with the above described example.

(1) usage of a recording medium
(2) download via the Internet/intranet
(3) broadcast download (download via an ordinary TV, as well)

The client 301 is a PC, or a firmware-updatable Internet terminal, or a Digital Living Network Alliance (DLNA) player, for example.

The client 301 comprises an internal bus 303, a processor 307, a storage section 310, a wireless LAN antenna 304, MAC/RF 305, a video sound module 311, and a display and speaker 302, for example. Moreover, the client 301 may further comprise a communication interface 306, a media control section 308, and a volatile memory 309.

The display and speaker 302 outputs the received video data and audio data. The internal bus 303 is a PCI-Express or the like in the case of a PC, for example. The wireless LAN antenna 304 is an antenna for transmitting and receiving data via a wireless LAN. Note that, the wireless LAN antenna 304 may have three or more antennas in the case of the IEEE802.11n scheme, for example. MAC/RF 305 is a wireless LAN module. MAC/RF 305 may obtain firmware from the server 201 via a wireless LAN. The communication interface 306 is, for example, an Ethernet card (Ethernet is the registered trademark) or the like. The processor 307 is a CPU in the case of a PC, or a microcomputer in the case of a STB, for example. The media control section 308 is a USB, SATA, or the like as the interface, and is a CD, DVD, BD, an SD card, or the like as the drive, for example. The volatile memory 309 is a RAM, for example. The internal storage section 310 is an HDD in the case of a PC, or a nonvolatile memory such as a Flash ROM in the case of a STB, for example. The video sound module 311 has a video and audio output function (HDMI or the like), for example.

For example, with the use of a readable recording medium having a content bit rate control program stored therein for causing the server 201 to execute the steps of transmitting video data via wireless communication with a variable wireless bandwidth from the server (first computer) 201 to the client (second computer) 301 that stores video data received and reads and displays the video data; based on usage status information of a buffer (e.g., area for storing video data of the internal storage section 310) of the client 301 received from the client 301, estimating a remaining time of video data within this buffer; estimating a wireless bandwidth of the wireless communication; controlling a content bit rate of video data transmitted to the client 301 based on the estimated remaining time and wireless bandwidth of the video data; and converting the content bit rate of video data to a content bit rate, which is controlled in the step of controlling the content bit rate, and transmitting the video data to the client 301, the above-described content bit rate control program can be installed into the server 201.

3. Additional remark

The content bit rate control method of the present invention can be provided as a content bit rate control program for causing a computer to execute each procedure of the method, a computer readable recording medium having the content bit rate control program recorded therein, a program product that includes the content bit rate control program and can be loaded in an internal memory of a computer, a computer, such as a server, including the content bit rate control program, or the like.

[Industrial Applicability]

The present invention can be used for, for example, a television receiver that sends image data between a tuner device and a display device via wireless communication.

It should be further understood by those skilled in the art that although the foregoing description has been made on embodiments of the invention, the invention is not limited thereto and various changes and modification may be made without departing from the spirit of the invention and the scope of the appended claims.

**Claims**

1. A wireless video distribution system, comprising:

   a wireless video distribution device (105, 201) that transmits video data via wireless communication with varying wireless bandwidth; and
   a wireless video receiving device (121, 301) that stores the video data received from the wireless video distribution device (105, 201) and reads and displays the video data, wherein
   the wireless video receiving device (121, 301) includes:

   a buffer (124) for storing the video data; and
   a buffer monitoring section (126) that monitors a usage status of the buffer (124) and transmits feedback information including usage status information to the wireless video distribution device (105, 201), and wherein
   the wireless video distribution device (105, 201) includes:

   a remaining buffer time estimation section (106) that estimates a remaining time of the video data within the buffer (124) based on the usage status information of the buffer (124) from the wireless video receiving device (121, 301);
   a wireless bandwidth estimation section (104) that estimates a wireless bandwidth between the wireless video distribution device (105, 201) and the wireless video receiving device (121, 301);
   a content bit rate control section (109) that controls a content bit rate of video data transmitted to the wireless video receiving device (121, 301) based on the estimated remaining time and wireless bandwidth of the video data; and
   a content bit rate converting section (110) that converts a content bit rate of the video data transmitted to the wireless video receiving device (121, 301) into a content bit rate controlled by the content bit rate control section (109).

2. The wireless video distribution system according to claim 1, wherein
   the usage status information of the buffer (124) is a number of video frames within the buffer (124), and wherein
   the remaining buffer time estimation section (106) estimates a remaining time of video data within the remaining time the buffer (124) based on the number of video frames and a time per frame.

3. The wireless video distribution system according to claim 1, wherein

if the estimated wireless bandwidth is smaller than a content bit rate and the estimated remaining time of the video data is equal to or greater than a predetermined threshold value, the content bit rate control section (110) does not change the content bit rate, and
if the estimated wireless bandwidth is smaller than the content bit rate and the estimated remaining time of the video data is smaller than the predetermined threshold value, the content bit rate control section (110) reduces the content bit rate.

4. The wireless video distribution system according to claim 3, wherein if the estimated wireless bandwidth is equal to or greater than the content bit rate and the estimated remaining time of the video data is equal to or greater than the threshold value, the content bit rate control section (110) reduces this content bit rate back to an initial value.

5. The wireless video distribution system according to claim 3, wherein if the estimated wireless bandwidth is equal to or greater than the content bit rate and the estimated remaining time of the video data is smaller than the predetermined threshold value, the content bit rate control section (110) does not change the content bit rate.

6. The wireless video distribution system according to claim 1, wherein
if the estimated wireless bandwidth is smaller than a content bit rate and the estimated remaining time of the video data is equal to or greater than a predetermined threshold value, the content bit rate control section (110) does not change the content bit rate,
if the estimated wireless bandwidth is smaller than a content bit rate and the estimated remaining time of the video data is smaller than the predetermined threshold value, the content bit rate control section 110 reduces the content bit rate,
if the estimated wireless bandwidth is equal to or greater than the content bit rate and the estimated remaining time of the video data is equal to or greater than the predetermined threshold value, the content bit rate control section (110) reduces the content bit rate back to an initial value or does not change the content bit rate, and
if the estimated wireless bandwidth is equal to or greater than the content bit rate and the estimated remaining time of the video data is smaller than the predetermined threshold value, the content bit rate control section (110) does not change the content bit rate.

7. The wireless video distribution system according to claim 1, wherein if the estimated remaining time of video data exceeds an upper limit time, within which the video data can be stored into the buffer (124), the content bit rate control section (110) stops transmission of video data.

8. The wireless video distribution system according to claim 7, wherein the remaining buffer time estimation section (110) calculates the upper limit time of the buffer (124) based on the estimated remaining time of the video data, a predetermined capacity of the buffer (124), and a data amount that is stored if the video data is transmitted at a current content bit rate.

9. The wireless video distribution system according to claim 6, wherein the remaining buffer time estimation section (110) calculates the upper limit time of the buffer using a following formula U(C),

$$U(C) = \quad R/(R/L - C) \qquad \text{in the case of } (R/L > C)$$

$$U(C) = \quad (A-R)/(C - R/L) \qquad \text{in the case of } (R/L < C)$$

$$U(C) = \quad \text{Infinity} \qquad \text{in the case of } (R/L = C)$$

where L: a remaining time (second) of the buffer (124), A: a capacity (byte) of the buffer (124), R: a remaining data amount (byte), C: a current content bit rate (byte per second).

10. The wireless video distribution system according to claim 1, further comprising a remaining buffer time predicting section (103) that estimates a remaining time of video data within the buffer (124) after a predetermined time, based on stored data that is stored by associating the remaining time of video data, which the remaining buffer time estimation section (106) estimated, with a time.

11. The wireless video distribution system according to claim 1, wherein the wireless bandwidth estimation section (104) estimates a wireless bandwidth based on a packet interval of packets which the wireless video receiving device (121, 301) receives from the wireless video distribution device (105, 201).

12. The wireless video distribution system according to claim 1, wherein the wireless bandwidth estimation section (104) predicts a wireless bandwidth after a predetermined time based on second stored data that is stored by associating the estimated wireless bandwidth with a time.

13. The wireless video distribution system according to claim 1, wherein the wireless video distribution device (105, 201) further includes a tuner section (102) for receiving via an antenna (101) the video data to be broadcasted.

14. A content bit rate control method in a wireless video distribution system comprising a wireless video distribution device (105, 201) that transmits video data via wireless communication with varying wireless bandwidth and a wireless video receiving device (121, 301) that stores the video data received from the wireless video distribution device (105, 201) and reads and displays the video data, the method comprising the steps of:

monitoring a usage status of a buffer (124) of the wireless video receiving device (121, 301) for storing the video data (Step 606), and transmitting feedback information including usage status information to the wireless video distribution device (105, 201) (Step 608);
estimating a remaining time of video data within the buffer (124) based on the usage status information of the buffer (124) from the wireless video receiving device (121, 301) (Step 508);
estimating a wireless bandwidth between the wireless video distribution device (105, 201) and the wireless video receiving device (121, 301) (Step 505);
controlling a content bit rate of the video data transmitted to the wireless video receiving device (121, 301) based on the estimated remaining time and wireless bandwidth of the video data (Step 507); and
converting the content bit rate of the video data to a content bit rate, which is controlled in the step (Step 507) of controlling the content bit rate, and transmitting the video data from the wireless video distribution device (105, 201) to the wireless video receiving device (121, 301) (Step 502).

15. A readable recording medium having a content bit rate control program stored therein for causing a first computer (105, 201) to execute the steps of:

transmitting video data via wireless communication with a variable wireless bandwidth from the first computer (105, 201) to a second computer (121, 301) that stores video data received and reads and displays the video data (Step 502);
based on usage status information of a buffer (124) of the second computer (121, 301) received from the second computer (121, 301), estimating a remaining time of the video data within the buffer (124) (Step 508);
estimating a wireless bandwidth of the wireless communication (Step 505);
controlling a content bit rate of the video data transmitted to the second computer (121,301) based on the estimated remaining time and wireless bandwidth of the video data (Step 507); and
converting the content bit rate of the video data to a content bit rate, which is controlled in the step (Step 507) of controlling the content bit rate, and transmitting the video data to the second computer (124) (Step 502).

**14**

# FIG. 1

CONFIGURATION DIAGRAM OF FUNCTIONAL MODULES

EP 2 268 029 A1

# FIG. 2
## CONFIGURATION DIAGRAM OF SEVER SYSTEM

201

213

203

202

212

211

210

DISPLAY AND SPEAKER

VIDEO/SOUND MODULE

DIGITAL BROADCAST RECEIVER MODULE

INTERNAL STORAGE SECTION

VOLATILE MEMORY

205

204

206

207

208

209

MAC/RF

COMMUNICATION I/F

PROCESSOR

MEDIA CONTROL SECTION

INTERNET/INTRANET

RECORDING MEDIA

# FIG. 3
## CONFIGURATION DIAGRAM OF CLIENT SYSTEM

301

302

311

310

309

DISPLAY AND SPEAKER

VIDEO AND SOUND MODULE

INTERNAL STORAGE SECTION

VOLATILE MEMORY

304

303

305

306

307

308

MAC/RF

COMMUNICATION I/F

PROCESSOR

MEDIA CONTROL SECTION

INTERNET/INTRANET

RECORDING MEDIA

# FIG. 4

CONTROL METHOD

| STATE MATRIX | | STATE OF ESTIMATED WIRELESS BANDWIDTH | | |
| --- | --- | --- | --- | --- |
| | | T<L FALL BELOW THRESHOLD VALUE (403) | L≦T<U(C) THERE IS MARGIN (404) | U(C)≦T (405) |
| STATE OF ESTIMATED REMAINING VIDEO BUFFER TIME | C≦W THERE IS MARGIN (401) | TRANSMIT WITHOUT CHANGING BIT RATE C (406) | TRANSMIT WHILE RETURNING BIT RATE C TO THE ORIGINAL ONE (407) | STOP TRANSMISSION (IMMEDIATELY BEFORE OVER-FLOWING) (408) |
| | W<C DIFFICULT TO TRANSMIT (402) | REDUCE BIT RATE C AND TRANSMIT (REDUCE C UNTIL T STOPS TO DECREASE) (409) | TRANSMIT WITHOUT CHANGING BIT RATE C (410) | STOP TRANSMISSION (IMMEDIATELY BEFORE OVER-FLOWING) (411) |

C=CONTENT BIT RATE (Mbps)
W=ESTIMATED WIRELESS BANDWIDTH (Mbps)
T=REMAINING TIME IN VIDEO BUFFER
L=THRESHOLD TIME OF VIDEO BUFFER
U(C)=UPPER LIMIT TIME OF VIDEO BUFFER

# FIG. 5

PROCEDURE TO PROCESS FEEDBACK INFORMATION IN SERVER

```
START
  │
REPEAT UNTIL          TRANSMIT DATA
FINISHED              PACKET          ~502
  501
                      RECEIVE FEEDBACK ~503
                      INFORMATION                  ESTIMATE WIRELESS
                                                   BANDWIDTH          ~505
                      IS FEEDBACK                                              ESTIMATE REMAINING
                      INFORMATION                  ARE THERE A NUMBER    YES   VIDEO BUFFER TIME  ~508
                      ABNORMAL?            NO       OF VIDEO FRAMES AND
                                                   A REMAINING DATA
                        504                        AMOUNT INFORMATION
                                                   WITHIN THE FEEDBACK
                                                   INFORMATION?        ~506

                                                   CONTROL CONTENT
                                                   BIT RATE           ~507
END
```

EP 2 268 029 A1

# FIG. 6

## FEEDBACK PROCEDURE IN CLIENT

START

OBTAIN PACKET FROM WIRELESS LAN MODULE ~602

MONITOR WIRELESS BANDWIDTH ~603

601

REPEAT UNTIL FINISHED

SUBJECT PAYLOAD OF PACKET TO Demux PROCESSING ~604

DISTRIBUTE Demux OUTPUT TO BUFFER OF EACH ES ~605

MONITOR VIDEO BUFFER ~606

STORE SEQUENTIAL NUMBER AND MONITOR TIME INTO DATA STRUCTURE OF FEEDBACK INFORMATION ~607

TRANSMIT FEEDBACK INFORMATION ~608

END

# FIG. 7

WIRELESS BANDWIDTH ESTIMATION PROCEDURE BY SERVER

ESTIMATE WIRELESS BANDWIDTH — 508

701 — IN "PAUSE TO ESTIMATE" STATE? / YES → RETURN — 705

702 — IN "START TO ESTIMATE" STATE? / YES → SET UPPER LIMIT AND LOWER LIMIT FOR BANDWIDTH ESTIMATION — 706

TRANSITION TO "DURING ESTIMATION" STATE — 707

703 — SPECIFY TO A DATA PACKET TRANSMISSION SECTION THE MEDIAN VALUE OF UPPER LIMIT AND LOWER LIMIT VALUES

704 — IS THERE PACKET INTERVAL INFORMATION? / YES → STORE PACKET INTERVAL INFORMATION AND THE LIKE — 708

709 — PACKET INTERVAL / DECREASE → SET MEDIAN VALUE AS LOWER LIMIT VALUE — 710

INCREASE → SET MEDIAN VALUE AS UPPER LIMIT VALUE — 711

COINCIDE WITHIN ALLOWABLE ERROR RANGE → STORE ESTIMATION RESULT — 712

PREDICT BANDWIDTH — 713

TRANSITION TO "PAUSE TO ESTIMATE" STATE — 714

EP 2 268 029 A1

# FIG. 8

PROCEDURE TO MONITOR WIRELESS BANDWIDTH BY CLIENT

| RECORD RECEIPT TIME OF PACKET | ~801 |

603 MONITOR WIRELESS BANDWIDTH

| IS THERE PREVIOUS CONTINUOUS PACKET? | ~802 |

NO → | RETURN | ~805 |

| CALCULATE PACKET INTERVAL TIME | ~803 |

| STORE FEEDBACK INTERVAL TIME INTO DATA STRUCTURE OF FEEDBACK INFORMATION | ~804 |

# FIG. 9

PROCEDURE TO ESTIMATE REMAINING VIDEO BUFFER TIME BY SERVER

| READ THE NUMBER OF VIDEO FRAMES AND REMAINING DATA AMOUNT OF FEEDBACK INFORMATION | ~901 |

508 ESTIMATE REMAINING VIDEO BUFFER TIME

| CALCULATE REMAINING TIME FROM THE NUMBER OF VIDEO FRAMES | ~902 |

| STORE REMAINING TIME AND REMAINING DATA AMOUNT | ~903 |

| PREDICT REMAINING TIME (L) AND REMAINING DATA AMOUNT (R) | ~904 |

| CALCULATE UPPER LIMIT TIME U(C) OF VIDEO BUFFER | ~905 |

[FORMULA 1]
$U(C) = L + (A-R)/C$
L: REMAINING TIME (s)
A: TOTAL BUFFER CAPACITY (MByte)
R: REMAINING DATA AMOUNT (MByte)
C: CURRENT CONTENT BIT RATE (MByte/2)

# FIG. 10

PROCEDURE TO MONITOR RECEPTION BUFFER BY CLIENT

INITIALIZE 1001

SCAN VIDEO BUFFER 1002

HAS DETECTED VIDEO FRAME? YES 1005

COUNT NUMBER OF FRAMES 1006

605 MONITOR VIDEO BUFFER

COUNT VIDEO BUFFER AMOUNT 1003

STORE THE NUMBER OF VIDEO FRAMES AND VIDEO DATA AMOUNT INTO FEEDBACK INFORMATION 1004

# FIG. 11

PROCEDURE TO CONTROL CONTENT BIT RATE BY SERVER

DETERMINE STATE OF WIRELESS BANDWIDTH (401/402) ~1101

DETERMINE STATE OF VIDEO BUFFER (403/404/405) ~1102

507 CONTROL CONTENT BIT RATE

1103~ DETERMINE STATE MATRIX

(406) — MAINTAIN C ~1105

(407) — REDUCE C ~1106

(408) — STOP TRANSMISSION ~1107

(409) — 1108~ HAS C RETURNED TO ORIGINAL RATE?

YES — MAINTAIN C 1111

NO — INCREASE C 1112

(410) — MAINTAIN C ~1109

(411) — STOP TRANSMISSION ~1110

SPECIFY A CONTENT BIT RATE TO A CONTENT BIT RATE CONVERTING SECTION ~1104

EP 2 268 029 A1

# FIG. 12

DATA STRUCTURE OF FEEDBACK INFORMATION

| FLAG | NUMBER | MONITOR TIME | PACKET INTERVAL |
|------|--------|--------------|-----------------|
| 1201 | 1202 | 1203 | 1204 |

| NUMBER OF VIDEO FRAMES | REMAINING DATA AMOUNT OF BUFFER |
|------------------------|--------------------------------|
| 1205 | 1206 |

# FIG. 13

BANDWIDTH ESTIMATING WORK TABLE

| NUMBER | MONITOR TIME | PACKET INTERVAL |
|--------|--------------|-----------------|
| 1301 | 1302 | 1303 |
|  |  |  |
|  |  |  |
|  |  |  |

1304

# FIG. 14

ESTIMATED BANDWIDTH DATA TABLE

1401    1402

| ESTIMATED TIME | ESTIMATED BANDWIDTH |
|---|---|
| | |
| | |
| ⋮ | |
| | |

1403

# FIG. 15

REMAINING-TIME DATA TABLE

1501    1502    1503    1504

| NUMBER | MONITOR TIME | REMAINING BUFFER TIME | REMAINING DATA AMOUNT OF BUFFER |
|---|---|---|---|
| | | | |
| | | | |
| | | ⋮ | |
| | | | |

1505

# FIG. 16

CONTENT BIT RATE HISTORY TABLE

| CONVERSION TIME | BIT RATE |
|---|---|
| | |
| | |
| | |

1601 1602

1603

# FIG. 17 PRIOR ART

ALTHOUGH BIT RATE OF CONTENT ITSELF ACTUALLY DIFFERS FOR EACH VIDEO FRAME, BIT RATE IS DEPICTED HERE AS BEING SAME FOR ALL THE FRAMES

1701 CONTENT BIT RATE

1704 DELAY OCCURS BECAUSE BANDWIDTH DECREASED

1702 WIRELESS BANDWIDTH

1703 REMAINING RECEPTION BUFFER TIME

1705 STOP VIDEO

1706 BUFFER UNDERFLOW

# FIG. 18 PRIOR ART

CONTROL CONTENT BIT RATE IN ACCORDANCE WITH FLUCTUATION IN WIRELESS BANDWIDTH (1801)

1701
CONTENT BIT RATE

IMAGE QUALITY DEGRADATION IS LARGE (1802)

PROBLEM IN PRIOR ART

1702
WIRELESS BANDWIDTH

1803 NO DELAY

1703
REMAINING RECEPTION BUFFER TIME

EP 2 268 029 A1

# FIG. 19

CONTROL A BIT RATE SO AS TO BE A BIT RATE THAT SUPPRESSES BUFFER UNDERFLOW, WITH THE USE OF THE FREQUENCY/DECREASE WIDTH OF A FLUCTUATION IN WIRELESS BANDWIDTH AND THE RECEPTION BUFFER AMOUNT

1701

CONTENT BIT RATE

LITTLE DEGRADATION IN IMAGE QUALITY (1902)

ADVANTAGE OF THE PRESENT INVENTION

1702

WIRELESS BANDWIDTH

1903 DELAY IS GRADUALLY RELAXED

1703

REMAINING RECEPTION BUFFER TIME

1904 REMAINING RECEPTION BUFFER TIME IS GRADUALLY RECOVERED

EP 2 268 029 A1

Europäisches
Patentamt

European
Patent Office

Office européen
des brevets

**EUROPEAN SEARCH REPORT**

Application Number

EP 10 00 5526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/170630 A1 (FALIK YOHAI [IL] ET AL) 17 July 2008 (2008-07-17) | 1,2,11, 13-15 | INV. H04N7/24 |
| Y | * figures 1-5 * | 3-7,10, 12 | |
| A | * paragraph [0036] - paragraph [0046] * <br> * paragraph [0079] - paragraph [0080] * <br> * paragraph [0086] - paragraph [0103] * <br> * paragraph [0144] * | 8,9 | |
| Y | RAGHUVEER A ET AL: "A Network-Aware Approach for Video and Metadata Streaming" IEEE TRANSACTIONS ON CIRCUITS AND SYSTEMS FOR VIDEO TECHNOLOGY, IEEE SERVICE CENTER, PISCATAWAY, NJ, US LNKD-DOI:10.1109/TCSVT.2007.897462, vol. 17, no. 8, 1 August 2007 (2007-08-01) , pages 1028-1040, XP011190414 ISSN: 1051-8215 | 3-6,10 | |
| A | * page 1028 - page 1031 * | 7-9,11 | |
| Y | WO 2006/127391 A2 (MICROSOFT CORP [US]) 30 November 2006 (2006-11-30) | 7 | |
| A | * figures 1, 3, 4 * <br> * paragraph [0016] - paragraph [0018] * <br> * paragraph [0024] - paragraph [0025] * <br> * paragraph [0030] - paragraph [0036] * <br> * paragraph [0043] - paragraph [0044] * | 1-6,8-15 | TECHNICAL FIELDS SEARCHED (IPC) H04N H04L |
| Y | WO 2007/018841 A2 (THOMSON LICENSING [FR]; WANG CHARLES CHUNAMING [CN]) 15 February 2007 (2007-02-15) * figures 2, 5 * <br> * paragraph [0013] - paragraph [0014] * <br> * paragraph [0025] - paragraph [0028] * | 12 | |

-/--

The present search report has been drawn up for all claims

| Place of search | Date of completion of the search | Examiner |
|---|---|---|
| Munich | 11 October 2010 | Döttling, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 00 5526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 03/045047 A2 (SK TELECOM CO LTD [KR]; HWANG IN SEONG [KR]; CHAE SANG HO [KR]; PARK H) 30 May 2003 (2003-05-30)<br>* figures 1-3 *<br>* page 2, line 6 - line 19 *<br>* page 3, line 3 - line 7 *<br>* page 4, line 19 - page 7, line 6 *<br>* page 8, line 14 - line 21 *<br>----- | 1,3-6, 14,15 | |
| X,D | US 2004/186877 A1 (WANG RU-SHANG [US] ET AL) 23 September 2004 (2004-09-23)<br>* figures 1-3 *<br>* paragraph [0002] - paragraph [0008] *<br>* paragraph [0035] - paragraph [0056] *<br>----- | 1 | |

TECHNICAL FIELDS
SEARCHED     (IPC)

The present search report has been drawn up for all claims

| Place of search | Date of completion of the search | Examiner |
|---|---|---|
| Munich | 11 October 2010 | Döttling, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                    EP 10 00 5526

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2010

| Patent document cited in search report | | Publication date | Patent family member(s) | | | Publication date |
|---|---|---|---|---|---|---|
| US 2008170630 | A1 | 17-07-2008 | NONE | | | |
| WO 2006127391 | A2 | 30-11-2006 | CN | 101203827 | A | 18-06-2008 |
| | | | EP | 1891502 | A2 | 27-02-2008 |
| | | | JP | 2008543176 | T | 27-11-2008 |
| | | | KR | 20080016817 | A | 22-02-2008 |
| | | | US | 2006282566 | A1 | 14-12-2006 |
| WO 2007018841 | A2 | 15-02-2007 | CN | 101238671 | A | 06-08-2008 |
| | | | EP | 1911186 | A2 | 16-04-2008 |
| | | | JP | 2009504084 | T | 29-01-2009 |
| | | | KR | 20080039892 | A | 07-05-2008 |
| | | | US | 2009219992 | A1 | 03-09-2009 |
| WO 03045047 | A2 | 30-05-2003 | AU | 2002366144 | A1 | 10-06-2003 |
| | | | CA | 2467487 | A1 | 30-05-2003 |
| | | | CN | 1615649 | A | 11-05-2005 |
| | | | EP | 1459514 | A2 | 22-09-2004 |
| | | | IL | 162119 | A | 20-07-2009 |
| | | | KR | 20030016144 | A | 26-02-2003 |
| | | | RU | 2277303 | C2 | 27-05-2006 |
| | | | TW | 238619 | B | 21-08-2005 |
| | | | US | 2005033879 | A1 | 10-02-2005 |
| US 2004186877 | A1 | 23-09-2004 | BR | PI0408566 | A | 21-03-2006 |
| | | | CA | 2517194 | A1 | 30-09-2004 |
| | | | CN | 1791872 | A | 21-06-2006 |
| | | | EP | 1606717 | A2 | 21-12-2005 |
| | | | WO | 2004083992 | A2 | 30-09-2004 |
| | | | JP | 4430660 | B2 | 10-03-2010 |
| | | | JP | 2006521035 | T | 14-09-2006 |
| | | | KR | 20060024351 | A | 16-03-2006 |
| | | | TW | 242957 | B | 01-11-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006521035 A

- JP 2006060802 A

**Non-patent literature cited in the description**

- **Manish Jain ; Constantinos Dovrolis.** *Pathload,* 2002

- **Vinay Ribeiro ; Rudolf Riedi ; Richard Baraniuk ; Jiri Navratil.** PathChirp. *Les Cottrell,* 2003
- **Ningning Hu ; Peter Steenkiste.** *IGI,* 2003